# EUROPÄISCHE PATENTSCHRIFT

(11) **EP 0 952 781 B1**
(45) Veröffentlichungstag und Bekanntmachung des Hinweises auf die Patenterteilung: **23.08.2000**
(21) Anmeldenummer: 97945820.5
(22) Anmeldetag: 11.10.1997
(51) Int. Cl.: A47J 27/18

(54) **VORRICHTUNG ZUR DISKONTINUIERLICHEN ZUBEREITUNG VON TEIGWAREN**
DEVICE FOR DISCONTINUED PREPARATION OF PASTA
DISPOSITIF POUR LA PREPARATION EN DISCONTINU DE PATES ALIMENTAIRES

(30) Priorität: 12.10.1996 DE 19642106
(43) Veröffentlichungstag der Anmeldung: 03.11.1999
(73) Patentinhaber: Stein, Hans-Ulrich, Dr., 6949 Comano (CH)
(72) Erfinder: Stein, Hans-Ulrich, Dr., 6949 Comano (CH)
(74) Vertreter: Thielmann, Andreas
(86) Internationale Anmeldenummer: EP9705629
(87) Internationale Veröffentlichungsnummer: WO9816146

(56) Entgegenhaltungen:
- EP-A- 0 140 987
- WO-A-92/02167
- WO-A-92/18040
- DE-A- 19 500 973

## Beschreibung

Die Erfindung betrifft eine Vorrichtung zum diskontinuierlichen Zubereiten von Teigwaren, wie Spaghetti od. dgl., mit einer Teigwarenzuführeinheit, einer von Einlaß- bzw. Auslaßschließklappen verschlossenen Teigwarenzubereitungseinheit zum Kochen und Entwässern der Teigwaren und einer Teigwarenausgabeeinheit, wobei die Teigwarenzubereitungseinheit nur eine einzige Kammer aufweist, die gleichzeitig zum Kochen und Abschrecken bzw. Entwässern der gekochten Teigwaren dient, wobei die Kammer eine längliche Form aufweist.

Aus der DE-A-195 00 973 ist eine Vorrichtung bekannt, die im wesentlichen aus einer als Dosierelement ausgebildeten Teigwarenzufuhreinheit und einer Teigwarenzubereitungseinheit besteht, welche wiederum eine Kochkammer mit einem Kochkammereinlaß und einem Kochkammerauslaß und eine Entwässerungskammer aufweist, deren Einlaß mit dem Kochkammerauslaß identisch ist.

Am Boden der Entwässerungskammer befindet sich ein Entwässerungskammerauslaß. Sämtliche Öffnungen der Kammer sind als Einlaß- bzw. Auslaßschließklappen ausgebildet. Dabei ist die Kochkammer in ihrem Einlaßbereich durch eine linear verfahrbare Schließklappe und der Auslaßbereich der Entwässerungskammer gleichfalls durch eine linear verfahrbare Schließklappe verschließbar.

Bei der Zubereitung der Teigwaren mittels dieser Vorrichtung werden die Teigwaren in der Kochkammer unter Hinzugabe von Frischwasser gekocht. Die Kochkammer wird dazu hermetisch verschlossen und erhitzt. Nach dem Kochvorgang wird der entstandene Überdruck abgelassen, die Kochkammer geöffnet und die Teigwaren in die Entwässerungskammer ausgebracht. Hier werden die Teigwaren mit Frischwasser abgeschreckt und dann auf einen Teller oder dgl. in einer Teigwarenausgabeeinheit ausgegeben.

Aus der WO-A-92/02167 ist eine gattungsbildende Vorrichtung zum diskontinuierlichen Zubereiten von Teigwaren bekannt. Diese Vorrichtung enthält eine Teigwarenzubereitungseinheit, die aus einer von Einlaß- bzw. Auslaßschließklappen verschlossenen, einzigen Kammer besteht. Diese Kammer ist über Leitungen mit zwei Heißwassertanks und einem Expansionstank verbunden.

Die diskontinuierliche Zubereitung der Teigwaren erfolgt in mehreren Verfahrensschritten. Die Teigwaren werden der einzigen Kammer zugeführt; diese wird durch die Einlaß- und Auslaßschließklappen verschlossen. Anschließend werden die Teigwaren in zwei Kochphasen gekocht.

In einer ersten Kochphase wird der mit Teigwaren gefüllten einzigen Kammer Heißwasser unter hohem Druck aus dem ersten Heißwassertank zugeführt. Das Heißwasser dringt in die Zellstruktur der Teigwaren ein und bricht die Zellstruktur auf. Nach einer vorbestimmten Zeit wird das Heißwasser in den Expansionstank entleert. In einer zweiten Kochphase wird Heißwasser unter geringerem Druck aus dem zweiten Heißwassertank in die einzige Kammer eingefüllt. Nach dieser zweiten zeitlich vorbestimmten Kochphase wird das Heißwasser über einen Wasserablauf aus der Kammer ausgelassen. Die nunmehr gekochten Teigwaren werden durch Öffnen der den Boden der einzigen Kammer bildenden Außlaßschließklappe aus der Kammer entfernt.

Sie fallen auf einen in der Teigwarenausgabeeinheit befindlichen Teller oder dergleichen.

Die bekannten Vorrichtungen zur diskontinuierlichen Zubereitung von Teigwaren sind verbesserungswürdig. Für die rasche Abfolge mehrerer Zubereitungen von Teigwaren mittels einer derartigen Vorrichtung ist es erstrebenswert, daß die einzige Kammer vollständig entleert wird, bevor frische, zuzubereitende Teigwaren in die einzige Kammer eingefüllt werden. Es ist deshalb Aufgabe der Erfindung, zu vermeiden, daß gekochte Teigwaren beim Entleeren der einzige Kammer an den Wänden derselben haften bleiben. Darüber hinaus ist es erwünscht, daß die bevorzugt als Automat in öffentlichen Bereichen aufgestellte Vorrichtung eine geringe Baugröße aufweist, und daß die Zeit zur Zubereitung der portionierten Teigwaren, insbesondere zur Zubereitung der ersten Portion bei noch kalter Vorrichtung, auf ein Minimum reduziert wird, um die anfordernde Person nicht zu lange warten zu lassen.

Diese Aufgabe wird dadurch gelöst, daß die einzige Kammer der Teigwarenzubereitungseinheit in ihrem Inneren zylindrisch ausgebildet ist und einen konischen Einsatz aufweist, der als Sieb ausgebildet ist.

Durch diesen konischen Siebeinsatz wird verhindert, daß die Teigwaren beim Ausbringen aus der einzigen Kammer an den Wänden derselben haften bleiben. Die erfindungsgemäße Ausgestaltung erleichtert eine Zirkulation von Dampf und Wasser und verhindert einen direkten Kontakt der Teigwaren mit der heißen Innenwandung der einzigen Kammer. Durch die geringe Kontaktfläche zwischen Teigwaren und Sieb wird die Gefahr des "Verklebens" minimiert.

Gemäß einer Ausgestaltung der Erfindung weist die einzige Kammer eine geringe Masse auf. Die geringe Masse der einzigen Kammer trägt zur Reduzierung der Zubereitungszyklen bei, da die nach dem Abschreckvorgang und Druckausgleich kühlere Kammer mit ihrer geringen Masse schnell wieder auf Betriebstemperatur gebracht werden kann. Dazu ist eine einzige, die Kammer außen umgebende Heißspirale, welche vorzugsweise elektrisch betrieben wird und mehrere Heizkreise aufweisen kann, besonders zweckmäßig.

Die Zirkulation von Wasser und Dampf sowie die Vermeidung des direkten Kontakts der Teigwaren mit der heißen Innenwandung der Kammer wird dadurch besonders unterstützt, daß der konische Siebeinsatz von der inneren Wandung der einzigen Kammer beabstandet angeordnet ist. Zwischen dem konischen Siebeinsatz und den Wandungen der Kammer bildet sich somit ein Raum, in dem Wasser und Dampf gut zirkulieren können.

Eine weitere Ausführungsform der Erfindung sieht vor, daß die Vorrichtung als Automat ausgebildet ist und einen Heißwasserspeicher aufweist. Durch die Verwendung eines separaten Heißwasserspeichers kann die Zeit zum Aufheizen der einzigen Kammer reduziert werden, da während des Abschreckvorganges und der Ausgabe der bereits zubereiteten Portion Teigwaren für die nächste Portion im Heißwasserspeicher die benötigte Menge Heißwasser bereits auf eine Temperatur gebracht werden kann, die soweit oberhalb der Betriebstemperatur der Kochkammer liegt, daß diese nach Einleiten in die Kochkammer die dort benötigte Betriebstemperatur aufweist. Zweckmäßigerweise ist bei der Verwendung eines solchen Heißwasserspeichers das Volumen und/oder die Betriebstemperatur des Heißwasserspeichers größer als das Volumen bzw. die Betriebstemperatur der einzigen Kammer.

Wird der einzigen Kammer durch eine Leitung Frischwasser zugeführt, kann die Kammer auch zum Abschrecken der gekochten Teigwaren verwendet werden.

Ein konstruktiv besonders einfacher Aufbau wird dadurch erreicht, daß gemäß einer weiteren Ausgestaltung der Erfindung die Wasserzulauf- und/oder Wasserablaufleitungen der einzigen Kammer in den die Kammer verschließenden Schließklappen vorgesehen sind. Auf diese Weise weist die einzige Kammer nur die beiden Einlaß- bzw. Auslaßöffnungen auf, so daß sämtliche Dichtelemente im Bereich der Schließklappen angeordnet sind. Dies ist auch für einen Austausch der Dichtelemente und die entsprechenden Wartungsarbeiten von besonderem Vorteil.

Die Erfindung wird nachfolgend anhand einer lediglich ein Ausführungsbeispiel darstellenden Zeichnung näher erläutert.

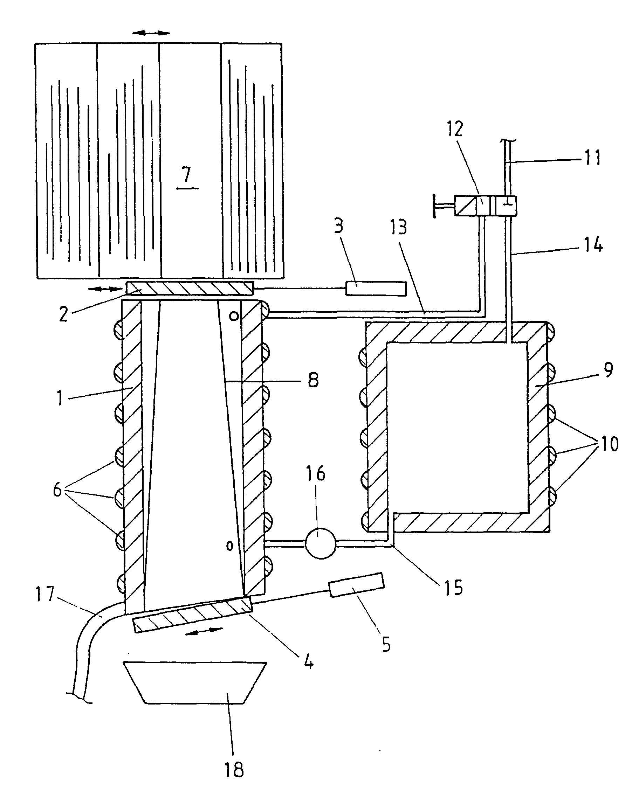

In der einzigen Figur ist die erfindungsgemäße Vorrichtung schematisch im Querschnitt dargestellt.

Man erkennt eine einzige, als Kochkammer und als Entwässerungskammer dienende Kammer 1, die nach oben von einer Einlaßschließklappe 2, welche linear entlang des Doppelpfeils von einem Motor 3 verfahrbar ist, verschlossen ist. Nach unten erfolgt das Verschließen durch eine Auslaßschließklappe 4, die gleichfalls linear über einen Motor 5 bewegbar ist.

Um die Kammer 1 ist eine Heizspirale 6 angeordnet. Zum Betrieb öffnet nun die obere Einlaßschließklappe 2, so daß aus einer oberhalb der Kammer 1 verfahrbaren Teigwarenzuführeinheit 7 eine portionierte Menge von Teigwaren in die Kammer 1 fällt, welche im Inneren ein konisches Sieb 8 aufweist.

Nach dem Schließen der Einlaßschließklappe 2 wird von einem bevorzugt separat vorgesehenen Heißwasserspeicher 9, der wiederum mit einer Heizschlange 10 versehen ist, erwärmtes Wasser, welches über eine Frischwasserzufuhr 11 und ein Ventil 12, von dem eine Zulaufleitung 13 in die Kammer 1 und eine Zulaufleitung 14 in den Heißwasserspeicher führt, versorgt wurde, über die Heizwasserleitung 15 mittels der Pumpe 16 der Kammer 1 in einer vorgegebenen Menge zugeführt.

Bevorzugt ist die Temperatur des Wassers bereits im Heißwasserspeicher so hoch, daß das in die Kammer 1 hineingepresste Wasser unmittelbar auf Betriebstemperatur (Kochtemperatur) gebracht werden kann. Dazu wird die Kammer 1 selbstverständlich hermetisch abgeschlossen.

Auch wenn im dargestellten Ausführungsbeispiel zur Verdeutlichung die Zu- bzw. Ablaufleitungen des Wassers in der Kammer 1 enden, ist es auch denkbar, diese in die verfahrbaren Schließklappen 2 und 4 zu integrieren, um die Kammer 1 frei von weiteren Öffnungen zu halten.

Nachdem der Kochvorgang der portionierten Teigwaren beendet ist, wird über die Leitung 13 kaltes Frischwasser in die Kammer 1 gelassen und die Teigwaren werden auf diese Weise abgeschreckt. Nach Abkühlung und Druckabfall öffnet ein nicht dargestelltes Ventil, so daß das in der einzigen Kammer 1 befindliche Wasser durch den Ablauf 17 entweichen kann. Hierbei hat sich gezeigt, daß eine Abwasserpumpe nicht notwendig ist, wenn die Auslaßöffnung der einzigen Kammer 1 an deren tiefsten Stelle angeordnet ist.

Nach vollständigem Ablaufen des Wassers öffnet die Auslaßschließklappe 4, so daß die zubereiteten Teigwaren in einen in der Teigwarenausgabeeinheit zur Verfügung gestellten Teller 18 od. dgl. hineinfallen und von der anfordernden Person entnommen werden können.

Während des Abschreckvorganges und der Entnahme der fertig zubereiteten Teigwaren wird in dem Heißwasserspeicher 9 bereits die nächste "Portion" Heißwasser zubereitet, um die Zubereitung der nächsten Portion Teigwaren in der Kammer 1 zu beschleunigen.

## Patentansprüche

1. Vorrichtung zum diskontinuierlichen Zubereiten von Teigwaren, wie Spaghetti od. dgl., mit einer Teigwarenzuführeinheit (7), einer von Einlaß- bzw. Auslaßschließklappen (2, 4) verschlossenen Teigwarenzubereitungseinheit (1) zum Kochen und Entwässern der Teigwaren und einer Teigwarenausgabeeinheit, wobei die Teigwarenzubereitungseinheit (1) nur eine einzige Kammer (1) aufweist, die gleichzeitig zum Kochen und Abschrecken bzw. Entwässern der gekochten Teigwaren dient, wobei die Kammer (1) eine längliche Form aufweist,
**dadurch gekennzeichnet**, daß die Kammer (1) in ihrem Inneren zylindrisch ausgebildet ist und einen konischen Einsatz aufweist, der als Sieb (8) ausgebildet ist.

2. Vorrichtung nach Anspruch 1,
**dadurch gekennzeichnet**, daß die Kammer (1) eine geringe Masse aufweist.

3. Vorrichtung nach einem der Ansprüche 1 und 2,
**dadurch gekennzeichnet**, daß der konische Siebeinsatz (8) von der inneren Wandung der Kammer (1) beabstandet angeordnet ist.

4. Vorrichtung nach einem der Ansprüche 1 bis 3,
**dadurch gekennzeichnet**, daß die Vorrichtung als Automat ausgebildet ist und einen Heißwasserspeicher (9) aufweist.

5. Vorrichtung nach Anspruch 4,
**dadurch gekennzeichnet**, daß die Kammer (1) und/oder der Heißwasserspeicher (9) von einer anliegenden Heizschlange (6, 10) beheizt werden.

6. Vorrichtung nach Anspruch 5,
**dadurch gekennzeichnet**, daß die Heizschlangen (6, 10) elektrisch betrieben sind und mehrere Heizkreise aufweisen.

7. Vorrichtung nach einem der Ansprüche 4 bis 6,
**dadurch gekennzeichnet**, daß das Volumen des Heißwasserspeichers (9) größer oder gleich dem Volumen der Kammer (1) ist.

8. Vorrichtung nach einem der Ansprüche 4 bis 7,
**dadurch gekennzeichnet**, daß die Betriebstemperatur des Heißwasserspeichers (9) größer oder gleich der Betriebstemperatur der Kammer (1) ist.

9. Vorrichtung nach einem der Ansprüche 1 bis 8,
**dadurch gekennzeichnet**, daß die Wasserzulauf- und/oder Wasserablaufleitungen der einzigen Kammer in den Einlaß- bzw. Auslaßschließklappen vorgesehen sind.

10. Vorrichtung nach einem der Ansprüche 1 bis 9,
**dadurch gekennzeichnet**, daß der einzigen Kammer (1) über eine Leitung (13) Frischwasser zugeführt wird.

## Claims

1. A device for the discontinuous preparation of pastry goods, such as spaghetti or similar, with a pastry goods infeed unit (7), a pastry goods preparation unit (1) closed by intake and outlet flaps (2, 4), for the cooking and dewatering of the pastry goods, and a pastry goods dispensing unit, whereby the pastry goods preparation unit (1) features only one single chamber (1), which serves simultaneously to cook and chill or dewater the cooked pastry goods, whereby the chamber (1) features a longitudinal shape, characterised in that the chamber (1) is designed in cylindrical shape in its interior, and features a conical insert which is designed as a sieve (8).

2. A device according to claim 1, characterised in that the chamber (1) features a low weight.

3. A device according to one of claims 1 and 2, characterised in that the conical sieve insert (8) is arranged at a distance from the inner wall of the chamber (1).

4. A device according to one of claims 1 to 3, characterised in that the device is designed as an automatic device, and features a hot water storage vessel (9).

5. A device according to claim 4, characterised in that the chamber (1) and/or the hot water storage vessel (9) is heated by a heating coil (6, 10) in contact with it.

6. A device according to claim 5, characterised in that the heating coils (6, 10) are electrically operated and feature several heating circuits.

7. A device according to one of claims 4 to 6, characterised in that the volume of the hot water storage vessel (9) is greater than or equal to the volume of the chamber (1).

8. A device according to one of claims 4 to 7, characterised in that the operating temperature of the hot water storage vessel (9) is greater than or equal to the operating temperature of the chamber (1).

9. A device according to one of claims 1 to 8, characterised in that the water intake and/or outlet pipes of the individual chambers are provided for in the intake or outlet closure flaps.

10. A device according to one of claims 1 to 9, characterised in that fresh water is fed to the single chamber (1) via a pipe (13).

## Revendications

1. Dispositif pour la préparation discontinue de pâtes alimentaires, comme des spaghettis ou similaires, comprenant une unité d'amenée de pâtes (7), une unité de préparation de pâtes (1) obturée par des clapets d'entrée et de sortie (2, 4), destinée à la cuisson et à l'égouttage des pâtes, et une unité de distribution de pâtes, l'unité de préparation de pâtes (1) ne présentant qu'une seule chambre (1) servant simultanément à cuire et refroidir et égoutter les pâtes cuites, la chambre (1) présentant une forme allongée, caractérisé en ce que la chambre (1) est de forme cylindrique en son espace intérieur et présente un insert conique configuré à la manière d'un tamis (8).

2. Dispositif selon la revendication 1, caractérisé en ce que la chambre (1) présente une petite masse.

3. Dispositif selon l'une des revendications 1 et 2, caractérisé en ce que l'insert de tamisage conique (8) est disposé à distance de la paroi intérieure de la chambre (1).

4. Dispositif selon l'une des revendications 1 à 3, caractérisé en ce que le dispositif est un appareil automatique et présente un accumulateur d'eau chaude (9) .

5. Dispositif selon la revendication 4, caractérisé en ce que la chambre (1) et/ou l'accumulateur d'eau chaude (9) est/sont chauffé(s) par un serpentin chauffant (6, 10) adjacent.

6. Dispositif selon la revendication 5, caractérisé en ce que les serpentins chauffants (6, 10) fonctionnent à l'électricité et présentent plusieurs circuits de chauffage.

7. Dispositif selon l'une des revendications 4 à 6, caractérisé en ce que le volume de l'accumulateur d'eau chaude (9) est plus gros ou égal au volume de la chambre (1).

8. Dispositif selon l'une des revendications 4 à 7, caractérisé en ce que la température de service de l'accumulateur d'eau chaude (9) est supérieure ou égale à la température de service de la chambre (1).

9. Dispositif selon l'une des revendications 1 à 8, caractérisé en ce que les conduites d'amenée et/ou d'évacuation d'eau de la chambre unique sont prévues dans les clapets d'entrée et de sortie.

10. Dispositif selon l'une des revendications 1 à 9, caractérisée en ce que de l'eau fraîche est apportée à la chambre unique (1) via une conduite (13).
